(19) Europäisches Patentamt
European Patent Office
Office européen des brevets

(11) EP 2 252 036 A1

(12) EUROPEAN PATENT APPLICATION

(43) Date of publication:
**17.11.2010 Bulletin 2010/46**

(51) Int Cl.:
***H04L 29/08*** *(2006.01)* ***H04L 12/26*** *(2006.01)*

(21) Application number: **09305441.9**

(22) Date of filing: **15.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Thomson Licensing**
**92130 Issy-les-Moulineaux (FR)**

(72) Inventor: **Jean-Yves Boudec**
**1015 Lausanne (CH)**

(74) Representative: **Rossmanith, Manfred**
**Deutsche Thomson OHG**
**European Patent Operations**
**Karl-Wiechert-Allee 74**
**30625 Hannover (DE)**

# (54) Method for disseminating content in a mobile ad hoc network

(57) A Method for measuring the age of content in a mobile opportunistic network comprising at least one fixed base station and a plurality of mobile nodes is suggested. In the network the base station 101 emits a content which is received by one or several mobile nodes 102 to 107. The method measures the time that has elapsed since the content has been emitted by the base station 101. A contact is established between a first and second mobile node and the measured time of the content on the first and second mobile node is compared. Subsequently, the more recent content between the first and second mobile node is transferred by replacing older content by the more recent content on the first and second mobile nodes. Then the number of nodes 102 to 107 that are present at a specific location in the network (100) is calculated. Finally, the number of nodes (Fc) that are present in the specific location and having a content that is younger than a predetermined age is calculated. The method also enables to control the operation of the base stations for a time duration that is necessary to maintain a predetermined level of quality.

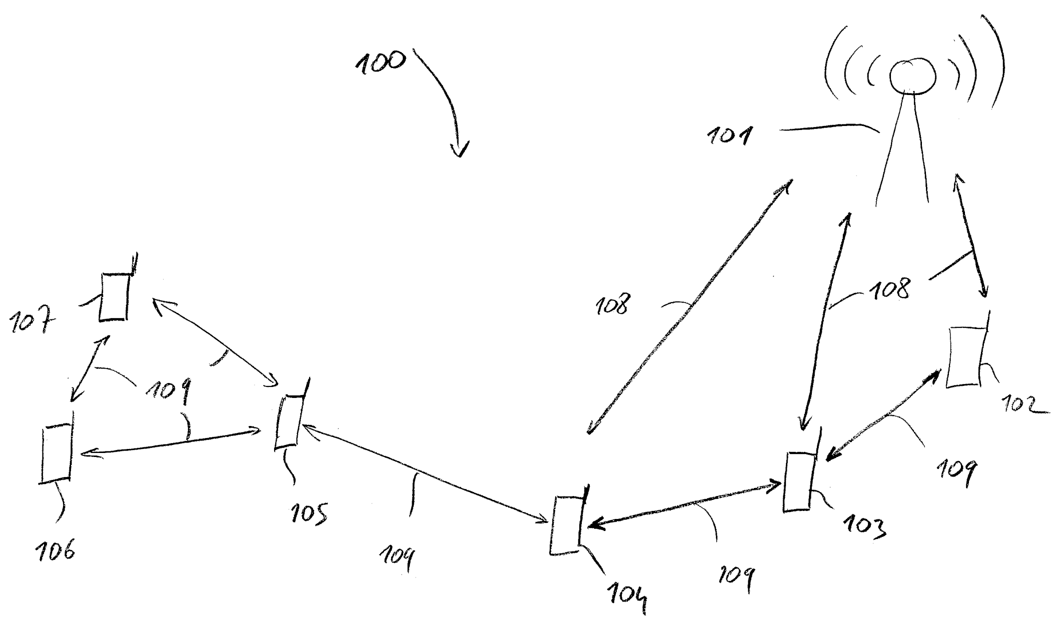


Fig. 1



Printed by Jouve, 75001 PARIS (FR)

## Description

### Field of the invention

The present invention relates to a method for measuring the age of content in a mobile opportunistic network comprising at least one fixed base station and a plurality of mobile nodes. In particular, the invention relates to a method according to claim 1. The invention also relates to a method for controlling the operation of one or several base stations in a mobile opportunistic network comprising also a plurality of mobile nodes is suggested. In particular, the invention also relates to a method according to claim 6.

### Background of the invention

The desire of users to access information and to exchange messages anywhere and any time is a key driving force for the extension of the internet and communication networks. The involved networks are wired or wireless networks or in many cases a combination of both. For the communication tasks a variety of different devices is used such as portable computers, mobile phones, and personal digital assistance (PDA). For the sake of simplicity, in the present application the term "mobile communication device" or "mobile node" will be used to include the above-mentioned examples. However, the term "mobile communication device" shall not be limited to these examples.

Besides the internet and other wired and wireless communication networks such as mobile telephone networks, mobile ad hoc networks (MANET) or delay tolerant networks have attracted a lot of interest with regard to the communication between mobile nodes. Mobile networks taking advantage of opportunistic contacts between mobile nodes in the network are also called opportunistic networks.

A mobile ad hoc network (MANET), sometimes also called a mobile mesh network, is a self-configuring network of mobile devices connected by wireless links.

Opportunistic MANETs are considered in the article "Context assisted routing protocols for inter-vehicle wireless communication" by Valentin Dumitrescu and Jinhua Guo (Published in : 2005 IEEE Intelligent Vehicles Symposium Proceedings (IEEE Cat. No. 05TH8792), 594-600. IEEE, Piscataway, NJ, USA, 2005, 905 pp. 10) for inter vehicle wireless communication. This kind of communication is useful to disseminate news, traffic information, entertainment content or advertising for the driver and the passengers, respectively. Especially for taxi cabs this way of communication can be particularly attractive, because the taxi cabs tend to cross each other several times a day at taxi stands. Therefore, a short range radio connection is sufficient to establish the communication among the entirety of all taxi cabs which is going to be explained further below.

Each of these applications, however, requires a certain level of infrastructure including locally fixed base stations. The number and placement of such base stations needed to achieve a given quality of service are not easy to guess. The answer, in general, depends on the density of mobile nodes in different areas of the network as well as the transition rates and rates of opportunistic contacts. In the context of the present patent application, quality of service is defined as the ability to provide different priority to different applications, users or data flows or to guarantee a certain level of performance to a data flow. In the context of the present patent application, the performance of the data flow is to be understood that at least a fraction of the users are provided with content that is not older than a predetermined period of time. The size of the fraction of users is not fixed but adaptable on a case by case basis.

Disseminating a piece of information or updates for a piece of information benefits greatly from simple randomised procedures, sometimes refer to as "gossiping", or epidemic algorithms. The term epidemic algorithm refers to epidemic routing protocols according to which messages diffuse in the network similarly to diseases or viruses by means of pair wise contacts between different mobile nodes in an uncoordinated manner. In contrast to that, in networks with classical routing the messages follow contacts between different mobile nodes in a coordinated manner.

A mobile node is infected by a message when it either generates that message or, alternatively, receives it from another node for forwarding. The infected node stores the message in a local buffer. A node is susceptible to infection when it has not yet received the message. A susceptible node becomes infected in case it comes in contact with an infected node and receives the message from it. An infected node is a node that stores that message. An infected node becomes recovered once having delivered a message to the destination node and as a result it also becomes immune to the same disease and does not provide relay to the same message anymore. In this picture the message is considered as virus and the technical terms are similar to biological processes.

Epidemic algorithms were first introduced to maintain consistency for a distributed data base in the face of updates offering a simple randomised alternative to complex deterministic algorithms. More recently, the same epidemic principle was introduced in order to forward information in mobile networks where links between nodes are intermittent.

In such a context a node stores information and takes advantage of opportunistic contacts with other nodes to propagate this piece of content in a delay tolerant manner. Epidemic algorithms are simple and scale well to deliver the same content to a larger number of hosts, complementing the usual shortcomings of an infrastructure. With a

multiplication of mobile devices equipped with short range wireless radios, e.g. Bluetooth radios according to IEEE 802.15.1 standard or Wi-Fi according to IEEE 802.11 standard, carried by either people or vehicles, it becomes possible to receive updated information in a peer-to-peer (P2P) manner. However, as the mobility of nodes is typically limited in speed and much slower than information propagation over wired or wireless links the delay for such mobility assisted scheme remains non-negligible. In addition, as each infrastructure of mobile nodes has constant capacity to forward information to its neighbours, this delay could grow significantly with the size of the network.

The quality of service as defined above is an important parameter for a network provider. In known mobile ad hoc networks the quality of service can only be determined by time consuming simulations.

Taking this as a starting point there remains a desire to determine the quality of service in a quicker way.

## Summary of the invention

According to a first aspect the present invention suggests a method for measuring the age of content in a mobile opportunistic network comprising at least one fixed base station and a plurality of mobile nodes. The method comprises the following steps;

- emitting a content by the base station;
- receiving the content by one or several mobile nodes;
- measuring the time elapsed since the content has been emitted by the base station;
- establishing a contact between a first and second mobile node;
- comparing the measured time of the content on the first and second mobile node;
- transferring the more recent content between the first and second mobile node;
- replacing older content by the more recent content on the first and second mobile nodes;
- calculating the number of nodes that are present at a specific location in the network, and
- calculating the number of nodes that are present in the specific location and having a content that is younger than a predetermined age.

The method may further comprise the step of calculating the rate of contacts between a node in one location with a node in the same location.

In addition to that, the method may further comprise the step of calculating the rate of contacts between a node in one location with a node in another location.

In an embodiment of the present invention the method further comprises the step of defining the elapsed time since the content has being emitted by the base station as the age of the content.

In an advantageous development of the invention the method further comprises the step of storing several content items in the mobile node having received the content items. In this case it has been found to be useful if the method further comprises the step of defining the elapsed time since a content item has been emitted by the base station as the age of the content item.

In another embodiment of the invention the number of nodes that are present at a specific location represents a fraction of the total number of nodes present in the network.

According to a second aspect of the invention which is complementary to the first aspect a method for controlling the operation of one or several base stations in a mobile opportunistic network comprising also a plurality of mobile nodes is suggested. The second aspect is complementary to the first aspect in the sense that for a predetermined quality of service it might not be necessary to operate the one or several base stations permanently. Hence, it is possible to use the base stations for providing another service. The inventive method according to the second aspect of the invention allows for doing so in a controlled way. The method comprises the step of executing the method according to the first aspect of the invention and

adapting the operation of the one or several base stations to achieve a predetermined age of the content in the mobile nodes.

In an advantageous embodiment of the invention the method further comprises the step of

limiting the duration of the operation of the base station to the necessary duration.

The afore-mentioned and other aspects of the invention will also be apparent from and elucidated with reference to the embodiments described herein after making reference to the drawings.

## Brief description of the drawings

In the accompanying drawings, embodiments of the present invention are shown.

Fig. 1 is a schematic depiction of a mobile communication device connected to another device via a local wireless

network;

Fig. 2 is a schematic block diagram of a mobile communication device;

Fig. 3 is a schematic diagram illustrating a first embodiment of the communication scheme according to the invention; and

Fig. 4 is a schematic diagram illustrating a second embodiment of the communication scheme according to the invention.

Description of embodiments of the invention

Fig. 1 exhibits a possible configuration of an opportunistic network which at a whole is denominated with the reference number 100. The network 100 is a delay tolerant network (DTN). Each device in the network 100 is free to move independently in any direction and will therefore change its links to other devices frequently. Each must forward traffic unrelated to its own news and therefore be a router. Such networks may operate by themselves or maybe connected to the larger internet.

The network 100 comprises one or several immobile or static base stations 101. In Fig. 1 only one base station 101 is shown, though the network 100 may comprise a plurality of such base stations 101. Within the network 100, there is a plurality of mobile nodes. For the sake of simplicity in the illustration, Fig. 1 shows only six mobile nodes 102 to 107. However, in reality the number of mobile nodes may be different and in most cases will be larger than six. The network 100 takes advantage of opportunistic contacts among the mobile nodes. A communication connection between any mobile node and the base station 101 is indicated in Fig. 1 with a double headed arrow 108. As shown in Fig. 1, the base station 101 is only in connection with mobile nodes 102, 103, and 104. In addition to that, the mobile nodes 102 and 103 as well as 103 and 104 are in communication connection as it is indicated with a double headed arrow 109. The base station 101 emits data files of different types like messages, images, audio and video files, or the content of web sites to name just a few. The data file in general is referred to as content.

The mobile nodes 105, 106, and 107 are out of reach of the base station of 101, e.g. because they are too distant from the base station 101 or the radio waves are blocked by obstacles or the like. Nevertheless, the mobile nodes 105, 106, and 107 are in communication connection with each other. Furthermore, the mobile node 105 is in communication connection with the mobile node 104 as it is indicated by a double headed arrow 109. Consequently, the contents emitted by the base station 101 are transferred from any mobile node to another mobile node at any time a connection is available. The connections required to transfer content from the base station 101 via the mobile node 104 to the mobile nodes 105 to 107 may occur at different points in time.

The network 100 is an opportunistic network which means that the mobile nodes 102 to 107 within the network 100 are enabled to communicate which each other even if a route directly connecting them never exists. The route between a sender and a receiver is established dynamically. While the content is en route between the sender and one receiver or a plurality of receivers, any other mobile node can opportunistically be used as a next hop to spread the content further and reads potentially more receivers.

Before explaining the details of the communication process within the opportunistic network 100 according to the invention, reference is made to Fig. 2 showing a schematic block diagram of an exemplary mobile node such as a PDA, a mobile phone, a portable computer or a vehicle mounted communication device.

Fig. 2 shows the schematic block diagram of functional blocks of a mobile node or mobile communication device which is indicated by the reference 200. The mobile communication device 200 may be embodied for example in a mobile telephone. The mobile communication device 200 includes at least one processor or central processing unit (CPU) 201 in signal communication with a system bus 202. The read only memory (ROM) 203, a random access memory (RAM) 204, a display adapter 205, an input/output (I/O) adapter 206 and a user interface adapter 207 are also in signal communication with the system bus 202.

A display unit 208 is in signal communication with the system bus 202 via the display adapter 205, and a keypad 209 is in signal communication with a system bus 202 via the user interface adapter 207. The mobile communication device 200 also includes a wireless communication device 210 in signal communication with a system bus 202 via the I/O adapter 206, or via other suitable means as understood by those skilled in the art. The wireless communication device 210 comprises a radio interface and an antenna to enable the mobile node to communicate according to one or several communication standards, e.g. GSM, UMTS, Bluetooth or Wi-Fi standard. In some embodiments of the invention, the wireless communication device 210 is arranged to connect also to near field communication (NFC) networks.

In other embodiments the mobile communication device 200 includes also other functionalities such as a camera, a voice recorder, mp3 player, and a GPS (global positioning receiver).

In the following a method for disseminating content in an opportunistic network is described. An embodiment of the invention is applied to opportunistic content updates through mobile nodes. It is assumed that a source constantly updates a file that is of interest for all nodes in the network. This file is immediately sent to one or several base stations 101 which then propagate it to mobile nodes 102 to 107. In addition, whenever an opportunistic contact occurs between

two mobile nodes, the one with the most up to date copy of the file forwards it to the other following an epidemic principle. We call age of the node the age of the latest copy of the file the node has seen so far. The file of interest can be any kind of data file containing e.g. text, images, music, or video. In the following the term content is used to generally refer to any type of file of interest. The age is the time elapsed since the content held by this node was emitted by a base station 101. This differs from most epidemiological models, which are interested in the time elapsed since the last infection of the node.

The described situation is illustrated in Fig. 3 where two mobile nodes 200, 200' contain a content C1 and C1'. The content C1 was emitted by the base station 101 at the point in time T1 and carries a corresponding time stamp T1. The content C1 was received by the mobile node 200 via opportunistic intermediate hops across other mobile nodes. Consequently, the age of the content C1 equals the time that has elapsed between the point in time T1 and the moment of now. Similarly, the mobile node 200' has received the content C1', which is a later version of the content C1 except that C1' was originally emitted by the base station 101 at the point in time T1'. The content C1' carries the time stamp T1'. In consequence, the age of content C1' equals the time that has elapsed between the point in time T1' and the moment of now. In the present case T1' shall be later than T1 on a time line 301, i.e. the content C1' is younger than the content C1. Therefore, the mobile node 200' sends the content C1' to mobile node 200 where C1 is replaced by C1'.

In the trivial case that a content C1 is not present at all in mobile node 200 but there is a content C1' in mobile node 200' then the content C1' will be transmitted to the mobile node 200 for storage regardless of the age of content C1'. This trivial case applies any time a specific content does not exist in a mobile node.

The method for disseminating information becomes more complicated if the mobile node 200 in the network 100 contains several content items C1 to Cn (where n is a natural number bigger than 1) as it is shown in Fig. 4. Correspondingly, the mobile node 200' contains content items C1' to Cn'. In such a situation the age of each content item is determined individually and the decision to transfer a content item is made in the same way as it has been described in connection with Fig. 3. It is noted that the age cannot be deduced from the time since the last infection of a considered mobile node as it depends on when the content was originally emitted by a base station.

In the opportunistic network 100 in which the content is disseminated according to the method described above the quantity of interest with regard to the present invention is the age distribution of the content across all mobile nodes in the network 100.

The present invention therefore suggests a method to measure the age distribution of content in the network 100. An important element of the method as described in the following is that contacts between mobile nodes occur as a function of their positions rather than in a random uniform way.

## 3. SPECIFICATIONS AND MODEL

### 3.1 A Multiclass Approach

We generally assume that nodes are distributed in a finite number of classes. A node may belong to only one class at any given time, although its class may change with time. This allows us to capture the mobility of nodes, as different classes can represent different locations or cells. Note that classes can capture other aspects of the system (type of nodes, wireless interface, etc.). We assume that nodes in the same class are statistically equivalent. Essentially it means that two different nodes, under the same condition of position, type, interface (captured via their class), behave statistically the same with respect to the evolution of their current information age.

*Assumptions.*

A collection of $N$ nodes move and collect updates according to the following three dynamics.

- **Mobility:** There exists a finite collection $C \subset \mathbb{N}$ of $C$ classes, and each node belongs to a only one class at any given time. We call $\rho_{c,c'}$ the rate of movements from class $c$ to class $c'$ per time unit.
- **Source Emission:** At any time a node can receive updated information directly from the source (*i.e.* a server maintained in an infrastructure). This may happen with rate $\mu_c$ for nodes that are in class $c$.
- **Opportunistic Contacts:** A node may meet opportunistically with nodes in the same or other classes. In this case we assume that the node with the most recent information transmits it to the other. We define the parameters $\eta_c$, $c \in C$ such that, whenever a pair of nodes both are in class $c$, they meet with a rate $\left(\frac{2\eta_c}{N-1}\right)$. This implies that the total contact rate in one class is $\frac{N_c(t)(N_c(t)-1)}{N-1}\eta_c$ where $N_c(t)$ is the number of nodes currently in class $c$.

We also allow for opportunistic contacts among nodes in different classes. This applies to cases where classes represent different types of nodes in the same location, or, as in §6, to contacts across class boundaries, when two classes are mapped to neighboring subareas. We define $\beta_{\{c,c\}}$, for $c \neq c'$ such that two nodes belonging to classes $c \neq c'$ meet with a rate $\left(\frac{2\beta_{\{c,c'\}}}{N-1}\right)$.

Note that a class may have no infrastructure (*i.e.* $\mu_c = 0$). In this case, the update of information can only come from nodes that visited different classes. It may also represent an inactive state (*i.e*, $\mu_c = \eta_c = 0$) where no meeting occurs.

> **Example 1 (Homogeneous Network).** There is $C = 1$ class. This is the simplest but probably not a realistic model. All nodes are the same and are equally likely to meet with the information source at any time (with rate $\mu$), as well as with each other (with rate $\eta$).
>
> **Example 2 (Classes as geographical regions)**. We can map a realistic scenario to classes as follows. We map a geographical area of interest to classes, where each class represents a sub-area. In some classes there is one or more sources of information, in which case $\mu_c$ is the aggregate rate of injection of new information at the sources (we explain in §6 how to measure $\mu_c$). In other classes, there is no source, in which case $\mu_c = 0$. We also consider an extra class (class 16 in §6) to represent mobile nodes that are not currently in the area of interest.

We show in §6 that classes do matter, in the sense that a model with just one or two classes gives a poor fit to trace results, whereas one with more classes gives a good fit.

Note that we assume in the model that the total number of nodes $N$ is constant, but, as illustrated in Example 2 above, we can account for a variable number of nodes by introducing an extra class, to represent mobiles that are not present in the area of interest. Thus, with our model, $N$ is in fact an upper bound on the number of nodes in the area of interest. We leave it to a forthcoming paper to extend the model to a variable, possibly unbounded, $N$.

*Metric.*

We are interested in the age distribution at any time and in any class. We are interested in the following quantities.

- $u_c^N(t)$ is the fraction of nodes in class $c$ at time $t$.
- $F_c^N(z,t)$ is the fraction of nodes at time $t$ that are in class $c$ and whose information (obtained from the source or by gossiping) has age $\leq z$. Note that we have, for any $t \geq 0$, $0 \leq F_c^N(z,t) \leq u_c^N(t)$, and $F_c^N(0,t) = 0$, $F_c^N(\infty,t) = u_c^N(t)$.

### 3.2 Model

The evolution of the system above is captured in continuous time via a drift and jump process. The state of the system at time $t$ is $\left(\vec{X}^N(t), \vec{c}^N(t)\right) = \left((X_n^N(t))_{n=1}^N, (c_n^N(t))_{n=1}^N\right)$, with:

> $X_n^N(t)$ : age of the most recent information held by node $n$.
>
> $c_n^N(t)$ : current class of node $n$.

The dynamics of ages is essentially characterized by:

- If nodes $m$, $n$ meet at time $t$ then

$$X_m^N(t) := X_n^N(t) := \min(X_m^N(t^-), X_n^N(t^-).$$

- If node $m$ meets a base station at time $t$ then $X_m^N(t) = 0$.

- The age of a node increases at rate 1 in an interval where this node does not meet any other nodes nor base stations.

We now formally describes all details of our model.

*3.2.1 Evolution of Nodes Between Classes*

$$\text{Let } \{\ K_{n,c,c'}\ \mid n \in N, c \in \mathcal{C}, c' \in \mathcal{C}, c \neq c'\ \} \text{ be } N \times C \times$$

($C$ - 1) independent Poisson Processes such that $Kn,c,c'$ has a rate $\rho_{c,c'}$. Each point of this process denotes a possible transition from the class $c$ to the class $c'$ for node $n$ (the transition always exist, but it has no effect unless the node $n$ is currently in state $c$). Thus

$$d\vec{c}^N = \sum_{n \in N} \sum_{c \in \mathcal{C}, c' \in \mathcal{C}, c' \neq c} (c' - c) \cdot 1_{\{c_n^N = c\}} \cdot \vec{e}_n dK_{n,c,c'} \, ;$$

where $\vec{e}_m$ is the $N$ x 1 vector with 0 at all components except the $m$th which is equal to 1. We can rewrite the fraction of nodes in class $c$, $\mu_c$ for any $N$ and any time $t$ as:

$$u_c^N(t) = \frac{1}{N} \sum_{n=1}^{N} 1_{\{c_n^N = c\}} \, .$$

The process $\{\ (u_c^N(t))_{c \in \mathcal{C}}\ \mid\ t \geq 0\ \}$ may also be thought of as the occupancy measure of the vector $\vec{c}^N$ with values in $C$. In other words, it characterizes the values taken by all the coordinates of $\vec{c}^N$ but ignores to which coordinates each value corresponds.

If we assume that the process above satisfies the initial conditions that converge to a deterministic limit $(d_c)_{c \in C}$:

$$\forall c \in \mathcal{C}\, ,\ \lim_{N \to \infty} u_c^N(0) = d_c\, ,\ \left(\ \text{for}\ \ d_c \geq 0, \sum_{c \in \mathcal{C}} d_c = 1 \right) \quad (1)$$

then as $N$ becomes large, Kurtz's theorem (see *e.g.*, [13]) states that the process of $\{\ (u_c^N(t))_{c \in \mathcal{C}}\ \mid\ t \geq 0\ \}$ converges to a deterministic limit { $(u_c(t))_{c \in C}$ | $t \geq 0$ } which is the unique solution of the following ODE problem:

$$\begin{cases} \forall c \in \mathcal{C}\, , & \frac{\partial u_c}{\partial t} = \sum_{c' \neq c} \rho_{c',c} u_{c'} - \left( \sum_{c' \neq c} \rho_{c,c'} \right) u_c \\ \forall c \in \mathcal{C}\, , & u_c(0) = d_c\, . \end{cases} \quad (2)$$

By Cauchy-Lipschitz theorem, for any boundary condition $(d_c)_{c\in}$ this ODE problem admits a unique solution. Following classical notation, we denote the value at time $t$ of the solution for boundary condition $d$ by $u_c(t|d)$.

Assuming that the matrix $\rho$ is irreducible, we may consider the stable mobility regime where $u_c(t) = \tilde{u}_c$ independently of $t$ and is defined as the unique solution of

$$\forall c \in C\,,\ \tilde{u}_c(\sum_{c' \neq c} \rho_{c,c'}) = \sum_{c' \neq c} \rho_{c',c} \tilde{u}_{c'} \ \text{ and } \ \sum_{c \in C} \tilde{u}_c = 1\,. \quad (3)$$

*3.2.2 Propagation of Information*

Let $A_{n,c}$, $n \in N$, $c \in C$ be $N \times C$ independent Poisson Processes such that $A_{n,c}$ has a rate $\mu_c$. Each point of this process denotes possible information received by *n* directly from the source in class *c* (the transition always exist, but it has no effect unless the node *n* is currently in class *c*).

Let $B_{m,n,c}$ $m \in N$, $n \in N$, $m < n$, $c \in C$ be $\frac{N\times(N-1)}{2} \times C$ independent Poisson Processes such that $B_{m,n,c}$ has a rate $\frac{2\cdot\eta_c}{N-1}$. Each point of this process denotes a possible opportunistic contacts for the pairs { *m,n* }, occurring in the class *c* (the transition always exist, but it has no effect unless the nodes *n* and *m* are currently both in class *c*).

Similarly, define $C_{m,n,\{c,c'\}}$ for $m \in N$, $n \in N$, $m < n$, $c \in C$, $c' \in C$, $c < c'$ be $\frac{N\times(N-1)}{2} \times \frac{C\times(C-1)}{2}$ independent Poisson Processes such that $C_{m,n,c,c'}$ has a rate $\frac{2\cdot\beta_{\{c,c'\}}}{N-1}$. Each point of this process denotes a possible opportunistic contacts for the pairs { *m,n* }, occurring when *m* or *n* is in class *c* and *m* or *n* is in class *c'* (the transition always exist, but it has no impact unless the nodes *n* and *m* are currently one in classes *c*, the other in class *c'*).

$$\begin{aligned}
d\vec{X}^N &= \vec{1}dt - \textstyle\sum_{n\in N}\sum_{c\in C} X_n^N \cdot 1_{\{c_n^N=c\}} \cdot \vec{e}_n dA_{n,c} \\
&+ \sum_{m<n}\sum_{c\in C}\Big[1_{\{X_m^N<X_n^N\}}\vec{e}_n\left(X_m^N - X_n^N\right) \\
&+ 1_{\{X_m^N>X_n^N\}}\vec{e}_m\left(X_n^N - X_m^N\right)\Big] 1_{\{c_n^N=c\}}1_{\{c_m^N=c\}} \cdot dB_{m,n,c} \\
&+ \sum_{m<n}\sum_{c<c'}\Big[1_{\{X_m^N<X_n^N\}}\vec{e}_n\left(X_m^N - X_n^N\right) \\
&+ 1_{\{X_m^N>X_n^N\}}\vec{e}_m\left(X_n^N - X_m^N\right)\Big] 1_{\{\{c_n^N,c_m^N\}=\{c,c'\}\}} \cdot dC_{m,n,c,c'}\,.
\end{aligned}$$

We define the occupancy measure of $\vec{X}^N$ (*t*) in class *c* by:

$$M_c^N(t) = \frac{1}{N}\sum_{n=1}^{N} 1_{\{c_n^N(t)=c\}}\delta_{X_n^N(t)}\,.$$

$F_c^N(z,t)$ (*i.e.,* the fraction of nodes that are in class *c* and with ages under z) is

$$F_c^N(z,t) = M_c^N(t)\left([0;z]\right) = \int_0^z M_c^N(t)(du)\,.$$

## 4. THE MEAN FIELD REGIME

### 4.1 Mean-Field Limit

The main result of this section is that, as shown in §3.2.1 for the evolution of Modes between classes, the evolution of the information age among nodes, when *N* gets large, becomes close to a deterministic limit characterized by differential equations.

We assume that the initial conditions of the system, as *N* gets large, converge to a deterministic limit. In other words, the occupancy of classes by nodes converges to a deterministic vector $(d_c)_{c\in C}$ according to Eq.(1), and the initial occupancy measure $M_c^N$ (0) of ages in each class converges weakly to a deterministic distribution $m_c^0$, with CDF $F_c^0$.

THEOREM 4.1. *As N gets large, the collection of occupancy measures* $M_c^N$ *converges in distribution to deterministic processes* { $m_c(t)$ | $t \geq 0$ }.

*If* $m_c^0$ *admits a density, then* $m_c(t)$ *has a density for all t and its CDF* $F_c(z, t)$ *is the unique solution of the following PDE problem*

$$\begin{cases} \forall c \in \mathcal{C}\,, & \dfrac{\partial F_c(z,t)}{\partial t} + \dfrac{\partial F_c(z,t)}{\partial z} = \\ & \displaystyle\sum_{c' \neq c} \rho_{c',c} F_{c'}(z,t) - \left( \sum_{c' \neq c} \rho_{c,c'} \right) F_c(z,t) \\ & + \left(u_c(t|d) - F_c(z,t)\right)\left(2\eta_c F_c(z,t) + \mu_c\right) \\ & + \left(u_c(t|d) - F_c(z,t)\right) \displaystyle\sum_{c' \neq c} 2\beta_{\{c,c'\}} F_{c'}(z,t) \\ \forall c \in \mathcal{C}\,, & \forall t \geq 0\,,\ F_c(0,t) = 0 \\ \forall c \in \mathcal{C}\,, & \forall z \geq 0\,,\ F_c(z,0) = F_c^0(z)\,. \end{cases} \tag{4}$$

*where* $u_c(t|d)$ *denotes the solution of Eq.(2).*

**How to explain the equation above**. Though we give a mathematical proof in the next section, it is possible to heuristically derive Theorem 4.1 by considering the mean held limit for the densities. The theorem implies that *Fc*(*z, t*) admits a density $f_c(z,t)$ at all times *t* if it has one at time 0; intuitively, the density should satisfy for all *c*:

$$
\begin{aligned}
& f_c(0,t) = \mu_c \cdot u_c(t) \\
& \frac{\partial f_c(z,t)}{\partial t} = -\frac{\partial f_c(z,t)}{\partial z} - \mu_c f_c(z,t) \\
& \quad + \quad \sum_{c' \neq c} \rho_{c',c} f_{c'}(z,t) - \left( \sum_{c' \neq c} \rho_{c,c'} \right) f_c(z,t) \\
& \quad + \quad 2\eta_c \left[ (+1) \times (u_c(t) - F_c(z,t)) \cdot f_c(z,t) \right. \\
& \qquad \left. + (-1) \times f_c(z,t) \cdot F_c(z,t) \right] \\
& \quad + \quad \sum_{c' \neq c} 2\beta_{\{c,c'\}} \left[ (+1) \times (u_c(t) - F_c(z,t)) \cdot f_{c'}(z,t) + \right. \\
& \qquad \left. + (-1) \times f_c(z,t) \cdot F_{c'}(z,t) \right] .
\end{aligned}
$$

The second equation can be interpreted using the different possible transitions from the point of view of the current population of nodes in class *c* and with ages around *z*: The first term denotes the passage of time. The second term denotes the population removed from age *z* by source injection. The second line denotes the movement of the node population with age *z* among different classes. The third and fourth line denotes the impact of opportunistic contacts within the same class and among different classes. The first transition corresponds to a new node in class *c* becoming of age *z* (which is why it is multiplied by +1). The node should already be in the class *c* and the nodes it met should have age *z*, hence the rate of such a transition is $(u_c(t) - F_c(z, t)) \cdot f_c(z,t) \cdot 2\eta_c$, or if the contacts is among different classes $(u_c(t) - Fc(z,t)) \cdot f_{c'}(z,t) \cdot 2\beta_{\{c,c'\}}$. Last, we have to account for transition where one node in class *c* is not any more with age *z* (which explains the -1 for the population) because its age decreases. This node leaving should be of age *z*, and it should meet a node with an age at most *z*, hence the transition occurs with rate $f_c(z, t) \cdot F_c(z,t)$. $2\eta_c$, or respectively with rate $f_c(z,t) \cdot F_{c'}(z, t) \cdot 2\beta_{\{c,c'\}}$ if this is an opportunistic contacts with another class *c'*.

The above system of equations may be simplified if we write by convention, when $c = c'$, $\beta_{\{c,c'\}} = \eta_c$. We can then write, as an example, $\Sigma_{c \in C} \beta_{\{cc'\}} = \Sigma_{c \neq c'} \beta_{\{c,c'\}} + \eta_c$.

$$
\begin{aligned}
& f_c(0,t) = \mu_c \cdot u_c(t) \\
& \frac{\partial f_c(z,t)}{\partial t} = -\frac{\partial f_c(z,t)}{\partial z} - \mu_c f_c(z,t) \\
& \quad + \sum_{c' \neq c} \rho_{c',c} f_{c'}(z,t) - \left( \sum_{c' \neq c} \rho_{c,c'} \right) f_c(z,t) \\
& \quad + \sum_{c'} 2\beta_{\{c,c'\}} \left[ (u_c(t) - F_c(z,t)) f_{c'}(z,t) - f_c(z,t) F_{c'}(z,t) \right] .
\end{aligned}
$$

Note that $z \mapsto (u_c(t) - F_c(z,t)) \cdot F_{c'}(z,t)$ is a primitive with regard to *z* of the terms in the last sum. Therefore, after integrating with regard to *z*, we obtain Eq.(4).

### 4.2 Solution of the PDE problem

The PDE problem described by Eq.(4) admits a unique solution, obtained as the transform of a function defined by an ODE problem.

THEOREM 4.2. The *problem in Eq.(4) has a unique solution F given by:*

$$\forall c \in \mathcal{C}\,,\ F_c(z,t) = \begin{cases} h_c(z|0, u(t-z|d)) & for\ z \le t \\ h_c(t|F_c^0(z-t), d) & for\ z > t \end{cases} \qquad (5)$$

*where $h(.|b, d)$ denotes the solution of the following ODE problem defined for a function $H : [0; \infty[ \rightarrow [0; 1]^C$:*

$$\begin{cases} \forall c \in \mathcal{C}\,, & \dfrac{d\,H_c(x)}{dx} = \sum_{c' \neq c} \rho_{c',c} H_{c'}(x) - (\sum_{c' \neq c} \rho_{c,c'}) H_c(x) \\ & \quad + (u_c(x|d) - H_c(x))\,(\mu_c + 2\eta_c H_c(x)) \\ & \quad + (u_c(x|d) - H_c(x)) \left( \sum_{c' \neq c} 2\beta_{\{c,c'\}} H_{c'}(x) \right) \\ \forall c \in \mathcal{C}\,, & H_c(0) = b_c\,. \end{cases}$$

In the special case where the class occupancy starts in steady state (i.e. $u(0) = \tilde{u}$), we have $F(z,t) = h(z|0,\tilde{u})$ for $z \le t$ and thus $F(z,t)$ does not depend on $t$ for $z \le t$; however, it still depends on $t$ for $z > t$.

### 4.3 Proof of the Mean Field Regime

We do the proof of Theorem 4.1 for $C = 1$, as the general proof is similar, but the notation becomes much heavier. Due to space limitations, we give only the essential elements of the proof. The proof is based on the method of [13, 15, 7, 4]. The proofs of lemmas can be found in [6].

We use the notation: $\mathcal{P}(\mathbb{R}^+)$ is the set of probabilities on $\mathbb{R}^+$. For $\nu \in \mathcal{P}(\mathbb{R}^+)$ and $f$ bounded defined on $\mathbb{R}^+$, $< f, \nu > = \int_0^{+\infty} f(x) d\nu(x)$. Note that $< f, M^N(t) > = \frac{1}{N} \sum_{n=1}^{N} f(X_n^N(t))$. The dirac mass at $x \in \mathbb{R}$ is $\delta_x$, so $M^N(t) = \frac{1}{N} \sum_{n=1}^{N} \delta_{X_n^N}(t)$.

We consider $(M^N(t))_{t \ge 0}$ as a stochastic process with samples paths in $D_{\mathcal{P}(\mathbb{R}^+)}[0, \bar{\infty})$ (the set of càdlàg functions of $t \in \mathbb{R}^+$, with values in $\mathcal{P}(\mathbb{R}^+))^1$. Theorem 4.1 states that $M^N$ converges in distribution to $m$ where $m$ is deterministic, and its set of marginal CDFs satisfy the PDE in Eq.(4).

The main steps are as follows. First, we show that the original system satisfies a martingale problem, obtained by computing the generator and applying it to linear and quadratic functions. Application to linear functions captures the deterministic component of $M^N(t)$, whereas application to quadratic functions captures the variance of $M^N(t)$. More precisely, let $\mathcal{G}^N$ be the generator of $M^N$; for $\phi$ a function from $\mathcal{P}(\mathbb{R}^+)$ to $\mathbb{R}$ and $\nu \in \mathcal{P}(\mathbb{R}^+)$:

$$(\mathcal{G}^N \phi)(\nu) := \lim_{dt \to 0} \frac{1}{dt} \mathbb{E} \left( \phi(M^N(t+dt) - \phi(\nu)) \middle| M^N(t) = \nu \right) .$$

We compute $\mathcal{G}^N$ for $\phi$ of the form $\phi(\nu) =< h, \nu >$ and $\phi(\nu) =< h,\nu >^2$, where $h$ is an arbitrary test function from $\mathbb{R}^+$ to $\mathbb{R}$ with bounded and continuous first and second derivatives. We show in appendix that:

$$\mathcal{G}^N(<h,.>)(\nu) = A(h,\nu) + B(h,\nu) + \frac{N}{N-1}C(h,\nu) \quad (6)$$

with

$$A(h,\nu) \;=\; <h',\nu>$$

$$B(h,\nu) \;=\; \mu\,(h(0) - <h,\nu>)$$

$$C(h,\nu) \;=\; 2\eta \int\int 1_{\{x<y\}}\,(h(x) - h(y))\,d\nu(x)d\nu(y)\,.$$

The term *A* accounts for aging. *B* for direct dissemination by the source and *C* for dissemination by meetings. Further:

$$\begin{aligned}\mathcal{G}^N(<h,.>^2)(\nu) \;&=\; 2<h,\nu>(\mathcal{G}^N <h,.>\nu) \\ &+\; \frac{1}{N}D(h,\nu) + \frac{1}{N-1}E(h,\nu) \quad (7)\end{aligned}$$

with ($G^N$ <*h*,.> *v*) given by Equation (6) and

$$D(h,\nu) \;=\; \mu <(h(0) - h)^2, \nu>$$

$$E(h,\nu) \;=\; 2\eta \int\int (h(x) - h(y))^2 1_{\{x<y\}} d\nu(x)d\nu(y)\,.$$

The terms *D* and *E* represent, in a sense, the variance of $M^N(t)$. As $N \to \infty$, these terms disappear (due to the 1/*N* or 1/(*N* - 1) factors) and, informally speaking, this is why the large *N* limit is non-random. It follows from standard results on jump and drift processes [13] that

LEMMA 4.1. *$M^N$ is a solution to the martingale problem defined by:*

*For all functions h* : $\mathbb{R}^+ \to \mathbb{R}$ *with continous and bounded first and second derivatives:*

$$<h, M^N(t)> - <h, M^N(0)> - \int_0^t \mathcal{G}^N <h,.> (M^N(s))ds$$

*and*

$$<h, M^N(t)>^2 - <h, M^N(0)>^2 - \int_0^t \mathcal{G}^N(<h,.>^2)(M^N(s))ds$$

*are $M^N$ (t)-martingales*.

Second, using dominated convergence arguments, we show that any weak limit of a subsequence $M^{N_k}$, $k \to \infty$ must satisfy the following martingale problem:

[1] It should be possible to extend the proof to a stronger result, namely the convergence in

$\mathcal{P}(D_{\mathbb{R}^+}[0,\infty))$ of $\mu^N = \frac{1}{N}\sum_n \delta_{X_n^N}$, of which $M^N$ is the set of marginals.

DEFINITION 4.1. *PROBLEEM MP* : *For all function h:* $\mathbb{R}^+ \to \mathbb{R}$ *with continuous and bounded first and second derivatives:*

$$< h, M(t) > - \int_0^t G(h, M(s))ds$$

*and*

$$< h, M(t) >^2 - < h, M(0) >^2 - \int_0^t 2 < h, M(s) > G(h, M(s))ds$$

*are* $M(t)-$*martingales, where for all* $\nu \in \mathcal{P}(\mathbb{R}^+)$*:*

$$G(h,\nu) = A(h,\nu) + B(h,\nu) + C(h,\nu) \qquad (8)$$

*with A, B and C defined in Eq (6).*

Third, we show that *MP* has at most one solution witch continuous sample paths and we establish, by means of the next three lemmas, equivalence with the PDE problem:

LEMMA 4.2. *Let m*(*t*) *be a solution of the martingale problem MP, with almost all sample paths continous (in P* ( $\mathbb{R}$ ) + *with Prohorov's toplogy), and such that m*(0) = $m_0$ almost *surely, where* $m_0 \in P(\mathbb{R}^+)$. *Then almost every sample path of m*(*t*) *satisfies: for each function h with continuous derivative:*

$$< h, m(t) > = < h, m_0 > + \int_0^t G(h, m(s))ds\,. \qquad (9)$$

LEMMA 4.3. *The problem in Equation (9) where m*(*t*) *is unknown but deterministic and* $m_0 \in P(\mathbb{R}^+)$ *given, has at most one solution.*

LEMMA 4.4 *Assume F*(*z*,0) *is differentiable and let F*(*z, t be the unique solution to the PDEs in Eq (4). For every t let m*(*t*) *be the measure with CDF F*(., *t*). *Then m*(*t*) *satisfies Equation (9).*

Fourth, we show that:

LEMMA 4.5. *Any weak limit of a subsequence* $M^{N,k}$ $k \to \infty$ *a.s. has continuous sample paths.*

At this point, it follows that any weak limit of a subsequence $M^{N_k}$, $k \to \infty$ is uniquely determined, thus al that remains to be shown is that, the sequence $M^N$ is relatively compact, which follows from:

LEMMA 4.6. *The sequence* $M^N$ *is tight.*

## 6. VALIDATION WITH TRACERS

In this section we test the accuracy of the model and the mean-field approximation. We use a large, publicly available data set of GPS traces collected by 500 San Francisco's taxi cabs during a period of more than two years [1]. It allows us to generate contact traces between Yellow Cabs (our mobile nodes) and base stations that we can place arbitrarily.

### 6.1 Validation Setup

In our scenario, the San Francisco Bay Area is divided into 16 classes, as shown in Figure 2. Fifteen classes are obtained using a regular square grid. Each of them corresponds to a region of about 4 sq km. The 16th class

surrounds the other classes and contains the area outside classes 1-15. Its existence is important, as it keeps the number of mobile nodes in the system rather constant. Base stations are placed in fixed locations, and we assume that they always have fresh information from a source server. We assume that each mobile node (*i.e.*, a Yellow Cab) is equipped with a short-range radio that allows for the exchange of data upon a meeting with base stations or other mobile nodes. As before, upon a meeting with a base station, a mobile node receives fresh information; and a meeting between two mobile nodes results in both of them having the latest information available in any of them before the meeting.

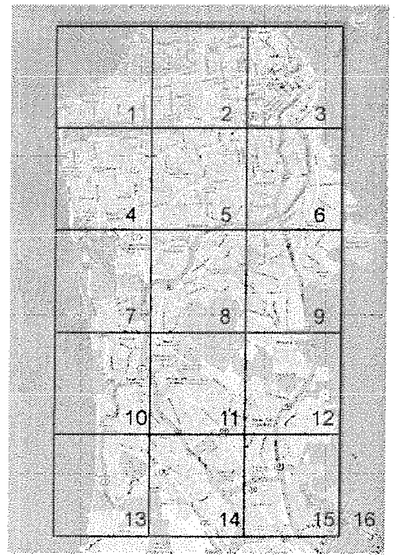


Figure 2: The Bay Area is split into 16 classes.

**Data Sets.** We use GPS position records, measured approximately once per minute, which were collected within the *Cabspotting* project [1] that aims at visualizing the aspects of everyday life in SF. About 500 Yellow cab vehicles that operate in the area are equipped with GPS receivers. Recorded data is sent to the central dispatcher and stored in the database. Each GPS record contains the cab's ID. current location, as well as the time stamp (as Unix epoch). This allows us to reconstruct the path of each individual mobile node for the past two years.

We consider a 30 day GPS trace, from May 17 to June 15, 2008. We observe the 16 hour periods between 8 a.m. and midnight. We want to avoid night-time, when the number of active cabs drops.

**Generation of Contact Traces**. In order to obtain an artificial contact trace from an existing GPS trace, we first have to define ranges, for both mobile nodes and base stations. We also have to define the notion of *meeting* between two mobile nodes or a mobile node and a base station.

We assume that mobile nodes' radios, as well as base stations, have a range of 200*m*. This corresponds to the envisioned range in vehicular communications [11], and it is a bit longer than the ranges of 802,11 devices (~ 140*m*) or Bluetooth Class 1 devices (~ 100m). Each mobile node performs scanning once per minute, looking for base stations and other mobile nodes in range. Once another mobile node or a base station is discovered, we use interpolation to make sure that the contact lasts at least 10 seconds. So, we assume that a meeting between two mobile nodes, or a mobile node; and a base station happened if, during scanning, it, mobile node detected another mobile node, or a base station and their contact lasted for at least 10 seconds. As shown in [5], a real system implemented on buses equipped with 802.11b radios has an average transfer opportunity duration of 10.2s, which is sufficient to exchange on average 1.2MB of data. Contacts between mobile nodes, and with a base station, can occur between scanning periods. We decide to ignore these contacts as most of the existing wireless technologies do not allow scanning and data exchange at the same time.

Using the provided definition of a *meeting*, we run a simulation (written in Java) and obtain the contact trace.

**Parameter Settings.** The input parameters for the model and the mean field approximation, as defined in Section 31, are $\mu_c$, $\mu_c$, $\beta_{c,c'}$ and $\rho_{c,c'}$. For each class, we extract them from the contact traces as follows:

$$\mu_c(t) = \frac{N_{c,ub}(t)}{N_c(t)} \quad , \quad \mu_c = \frac{1}{60} \sum_{t=t_0}^{t_0+60} \mu_c(t) \, ,$$

$$\eta_c(t) = \frac{N_{c,uu}(t)}{u_c(t) * (N_c(t) - 1)} \quad , \quad \eta_c = \frac{1}{60} \sum_{t=t_0}^{t_0+60} \eta_c(t) \, ,$$

$$\beta_{c,c'}(t) = \frac{N_{c,c',uu}(t)}{2 * N(t) * u_c(t) * u_{c'}(t)} \quad , \quad \beta_{c,c'} = \frac{1}{60} \sum_{t=t_0}^{t_0+60} \beta_{c,c'}(t) \, ,$$

$$\rho_{c,c'}(t) = \frac{N_{c,c',trans}(t)}{N_c(t)} \quad , \quad \rho_{c,c'} = \frac{1}{60} \sum_{t=t_0}^{t_0+60} \rho_{c,c'}(t) \, .$$

where for any time slot $t$ (in minute), $N(t)$ is the total number of nodes; for any $c$ we denote by $N_c(t)$ (resp. $u_c(t)$) the number (resp. the fraction) of nodes in class $c$, and we denote by $N_{c,ub}(t)$ (resp. $N_{c,uu}(t)$) the number of meeting between mobile nodes and base stations (resp. between two mobile nodes) during the time slot $t$; finally, for any classes $c \neq c'$, we denote by $N_{c,c',uu}(t)$ (resp. $N_{c,c',trans}(t)$) the number of meetings between nodes of different classes (resp. the number of transitions from $c$ to $c'$) during time slot $t$. As shown above, per hour values of the parameters are calculated by averaging their per minute (per time slot) values over the period of one hour. The necessary per minute values are extracted from the generated contact trace.

The values of the input parameters indicate that the node distribution is highly skewed: 75%, of the nodes are contained within 4 popular classes (2,3,6 and 15, *i.e.*, city center and airport); nodes spend on average 1.2 to 40 min in one of these classes before moving: 10% of the nodes are contained in surrounding classes (1,4,5,9 and 12) where nodes stay less time (4 to 12mn before moving). Class 16 contains roughly 10% of "persistent" nodes that remain in this class two hours on average. All the other classes contain in total 5% of the nodes; class 13 is generally empty. The rate of meetings for two given nodes within the same class is generally between (1/60mn) and (1/80mn); this contact rate is higher in classes 9,12,15 (1/20mn), and much smaller in 10,11,13,16 (under 1/200mn). Contacts between the nodes in different classes are almost negligible (with rate less than 1/2000mn).

**Running the Simulations**. The calculated input parameters are used twice: first, to simulate the random model described in Section 3.2 with $N$ = 500 nodes, and, second, to evaluate the mean field limit by solving the associated ODEs (Theorem 4.2) in Matlab[2]. The contact trace itself is used directly for an event-driven simulation.

In all three cases, we get the corresponding age distributions for each minute of observation.

### 6.2 Comparison of Trace, Model & MF Limit

We now compare the age distributions obtained from the trace, the model and the mean-field approximation, for the case of a single base station, placed in class 3. In terms of contacts, a given node in class 3 meets the base station with a rate (1/45mn). Simulations begin at 8 a.m. We set the initial age of information for each mobile node to 8 hours, in line with the night-time inactivity.

Figure 3 shows the trace, the model and the mean-field CDFs for ages in different classes, observed at 1 and 8 p.m. by the three methods mentioned above. CDFs were estimated every minute and averaged over an hour. We omit classes 13 and 16 as they are of less interest and generally not connected to the rest of the network.

The distribution of age, obtained from the model, shows a very good match with the distribution taken from the traces, in particular for popular classes (2, 3, 6, 15) and their surroundings (1, 4, 5, 6, 12). This means that our modeling assumptions succeeded in accurately capturing the collective behavior of gossip among taxis. Some discrepancies are deserved for peripheral classes, which may be explained as follows: In classes with very few mobile nodes, the age of a single mobile node (which stopped for some reason too far from the main road and cannot receive an update), can create a significant difference between the trace and the model. Indeed, classes 10, 11 and 14 contain on average 1.1, 2.1 and 2 mobile nodes respectively.

The mean-field limit matches the model extremely well, except, again, for discrepancies observed in peripheral areas.

*6.2.1 The Importance of Being Opportunistic*

For update applications, the quality of service (in terms of age) can be measured as the fraction of mobile nodes in each class whose age is lower than a given threshold. We now compare this metric for the cases when opportunistic exchanges between mobile nodes are allowed, and when the dissemination is performed only through the base station.

Figure 4 shows the percentage of mobile nodes in each class that have age less than 20 minutes at 1*p.m.* and 8*p.m.* (300 and 720 minutes after the start of observation), obtained from the trace, the model and the mean-field approxnation. The figure also displays the same percentage for the case where only the base station is allowed to disseminate information; this percentage is generally very small and remains under 20%, even in class 3 where the base station is located. Using opportunistic contacts between mobile nodes, in contrast, allows us to significantly improve percentages in all classes, and to approach very high percentages in classes 2, 3, 6, 9, 12, 15 (which together contain 80% of the nodes).

These results are best interpreted using a spatial representation as in Figure 5, where data provided in the upper panel of Figure 4 are shown spatially for the trace and the mean-field approximation.

[2]The value of $\tilde{u}_c$ in the ODE is obtained from Eq.(3).

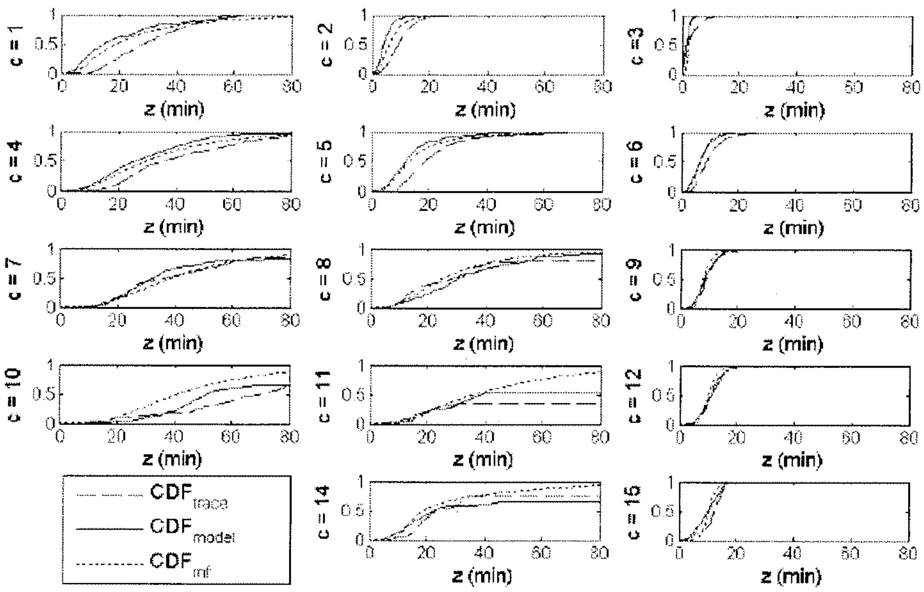


(a) t=1pm

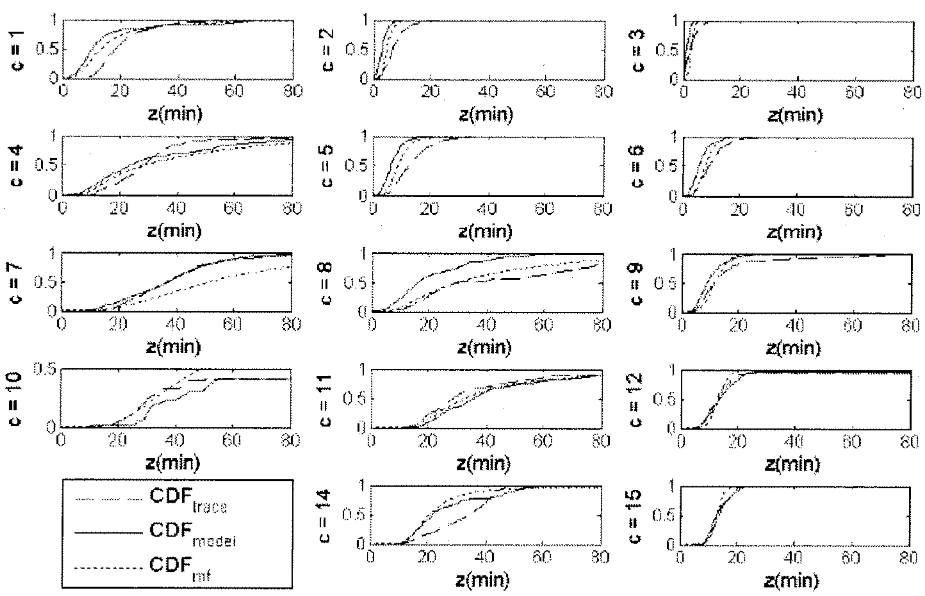


(b) t=8pm

**Figure 3: CDFs for classes 1-12 and 14-15, obtained from the trace, the model and the mean field limit. The CDFs show the age distribution (z) in different areas of San Francisco at 1 p.m. and 8 p.m., for the case of a single base station, placed in class 3.**

We observe that classes benefit differently from the base station located in class 3. First, classes 2 and 6 benefit from it as they are immediate neighbors. Second, classes 9, 12 and 15 benefit from the cars traveling on the highway between the city center and the airport, as well as the high meeting rate between cars in these classes. Classes

1 and 5, although geographically closer to class 3, benefit less from opportunistic contacts, due to bias in the mobility. All other classes benefit only marginally as the density of cars and exchanges are too small.

In summary, the opportunistic contacts are useful as they significantly improve the availability of accurate information in the network and can compensate for a lack of infrastructure. The improvement depends critically on the node density, the mobility and the opportunistic contact rates and it is accurately captured by the mean-field limit.

*6.2.2 The Importance of Being Spatial*

We now evaluate the influence of the *spatial* approach on the accuracy of the model, by comparing our previous results to a case where all classes 1 - 15 have been merged into a single one (so that only 2 classes remain, *i.e.,* $C = 2$)

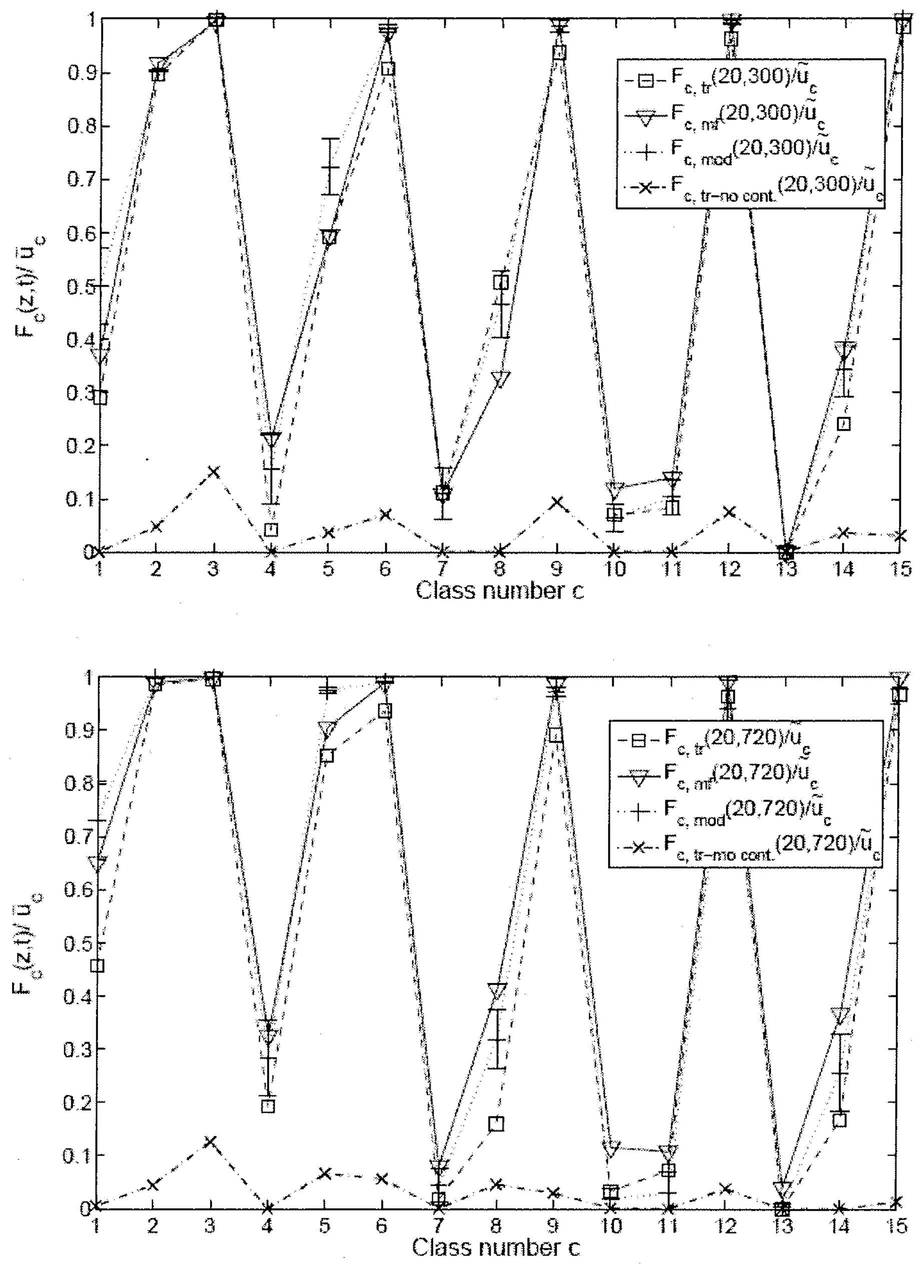


Figure 4: The fraction of mobile nodes in classes 1-15 that have age z<20mn acquired from the trace, the model and the mean field limit, for a single base station placed in class 3. We plot for comparison the values obtained from the trace without opportunistic contacts (bottom curves). Top panel - values at 1 p.m. (t=300mn). Bottom panel - values at 8 p.m. (t=720mn).

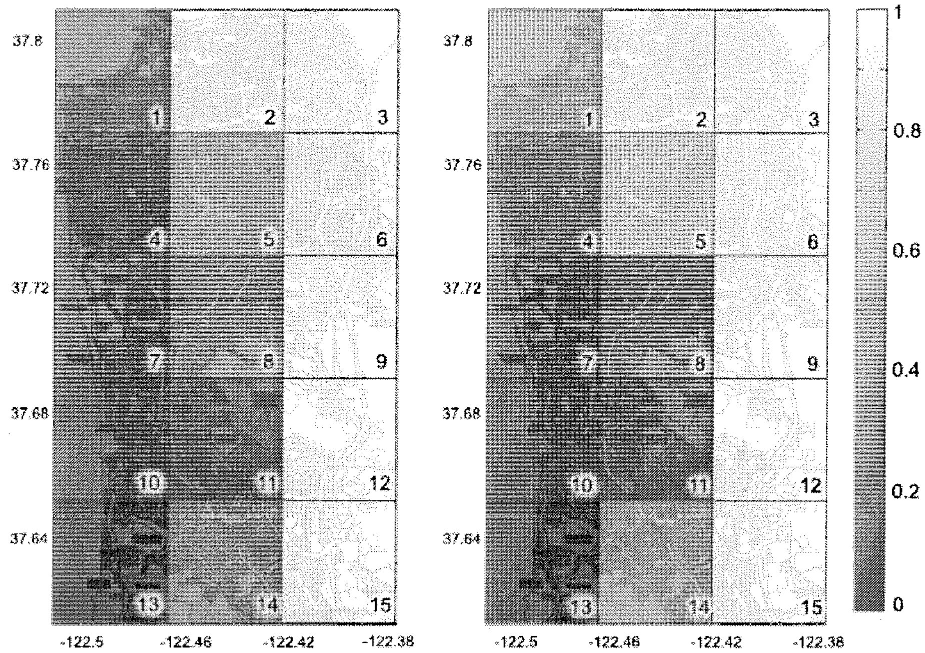


**Figure 5: Comparison between the mean field limit and the trace. Percentages of mobile nodes in classes 1-15 with age z<20mn at time t=300mn (1 p.m.).**

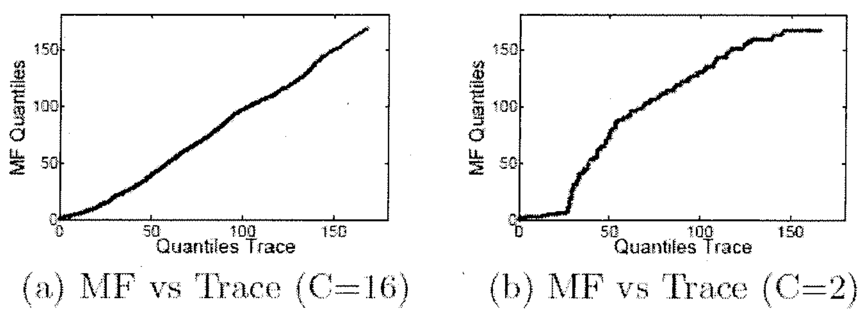


(a) MF vs Trace (C=16) (b) MF vs Trace (C=2)

**Figure 6: The importance of being spatial. QQ plots, comparing the age distributions of trace data and data artificially obtained from the mean field CDF, for 16 class and 2 class scenarios. Time period observed is 5 p.m.-6 p.m.**

Figure 6 displays QQ plots, comparing the age distribution of trace data with the corresponding age distributions obtained from the mean-field approximation, for both of the aforementioned cases ($C$ = 16 and $C$ = 2). The trace data shown in the figure, for the case $C$ = 16, was collected by mobile nodes in classes 1 - 15, during the afternoon peak hour (5pm-6pm), while the trace data for the 2 class case was collected by mobile nodes in class 1, during the same period. Age samples were taken on a per minute bases. The artificial mean-field data samples were generated from the mean-field CDFs, for the same time interval.

Figure 6(a) suggests that the mean-field and trace age data samples, for the case $C$ = 16, come from the same distribution. In contrast, when $C$ = 2, (Figure 6(b)), we observe that the mean-field limit underestimates quantiles for low

age and almost always overestimates quantiles for high age. This is a clear indication that data came from different distributions.

The results above show that it is essential to capture the diversity of locations (via classes), as they differ radically in terms of expected performance (age distribution). The primary factors are the dependencies between classes created by patterns of mobility (transition matrix $\rho_{c,c'}$) and the contact rates ($\mu_c$, $\eta_c$, $\beta_{c,c'}$) that are influenced by mobile node densities and variations in placement of base stations.

## 7. APPLICATION

Let us consider the following problem. We would like to leverage mobility and opportunistic contacts between taxicabs to disseminate news, traffic information or advertising. Each of these applications, however, requires a certain level of infrastructure (base stations). The number and placement of base stations, needed to achieve a given quality of service, are not easy to guess. The answer, in general, depends on the density of nodes in different areas, as well as the transition rates and rates of opportunistic contacts. We demonstrate in this section that a greedy algorithm based on the mean-field limit offers a fast and efficient method for placement of base stations, over multiple classes and a significant improvement over the other simple heuristics.

### 7.1 Method for Infrastructure Deployment Based on MF Approximation

The problem we solve can be formulated in the following way: For a fixed budget (fixed number of base stations), we would like to find an efficient placement of base stations
over a predetermined finite set of classes, based on a range of possible metrics.

**Assumptions.** We assume that a redefined set of possible locations in each class, where the base stations can be placed, is known to the service planners. Each of these locations carries information about the popularity of the spot. Our assumption is that this piece of information, along with the other input parameters required by the model, can be provided by traffic engineers (traffic counting and estimation models), or based on a trace, collected by some other service in the city (a taxi company for instance).

Metrics. We wish to maximize one of the following objectives ($F_c(z_0,t_0)$ and $\bar{u}_c$ follow previous definitions):

| $metric_1$ | $metric_2$ | $metric_3$ |
|---|---|---|
| $\sum_{c=1}^{C'} F_c(z_0, t_0)$ | $\sum_{c=1}^{C'} \frac{F_c(z_0,t_0)}{\bar{u}_c}$ | $\min_{c=1,\ldots,C'} \frac{F_c(z_0,t_0)}{\bar{u}_c}$ |

Maximizing *metric*1 is a global "per mobile node" objective; it tends to maximize the number of mobile nodes, in all classes, that have an age lower then $z_0$ during the peak hour ($t_0$): *Metric*2 is a "per class" metric; using this metric we try to achieve more even distribution of mobile nodes with ages lower than $z_0$, over the observed 15 classes. Finally, *metric*3 focuses on the class with the "worst"' value of the age, and tends to decrease the gap in quality that exists between this class and the other classes; this metric can be used for instance if we want to achieve some minimal QoS in all classes. We denote the total number of classes, where we plan to place base stations, by *C'*. In our particular case *C'* = 15, as we do not place any base stations in class 16 (our goal is not to maximize the quality in class 16).

**Placement of base stations**. The algorithm we propose for the placement of base stations is a greedy algorithm (see [9]). Let us denote the total number of base stations by *S*, and the the number of base stations placed in class *c* by $a_c$. The cost will be defined as the total number of base station (*i.e., cost* = $\sum_{c=1}^{C'} a_c$). As explained in *Assumptions*, we assume that the dependency $\mu_c(a_c)$ is known to the service planners, along with the other input parameters for our model. As defined in 3.1, $\mu_c$ denotes a contact rate with the base stations, per mobile node, per time unit, inside class *c*. A base station placed in class *c* cannot be seen from other classes, but only within a region, limited by the base station's range, inside class *c*. We start adding base stations one by one. For each base station there are *C*' possible placement options, one for each of the classes to which base stations are being added. Here we apply the *greedy* approach and use the ODEs (Theorem 4.2) to evaluate which placement, out of *C*' possibilities, brings the most benefit to the observed metric. The base station is then placed accordingly. The procedure is repeated *S* times until all *S* base stations are placed. Algorithm requires the system of ODEs to be solved *S*x*C*', times.

**Example.** Here we provide a numerical example for the placement method described above, based on the taxicab scenario described in Section 6. We assume that 30 base stations should be placed. The input parameters for

the system of ODES are known, as well as the dependency $\mu_c(a_c)$. We used input parameters for the afternoon peak hour (5*p.m.* - 6*p.m.*). The goal is to choose values of $a_c$ for each of the fifteen classes where base stations can be placed.

**Table 1: Placement of 30 base stations in classes 1 - 15, acquired from the *greedy placement*, which uses the ODEs for quality estimation, for 3 metrics defined in this section. Uniform and proportional placements of base stations are also shown.**

| Class num | Number of base stations per class | | | | |
|---|---|---|---|---|---|
| | *metr*1 | *metr*2 | *metr*3 | *unif.* | *prop.* |
| $c$ = 1 | 3 | 2 | 0 | 2 | 0 |
| $c$ = 2 | 0 | 0 | 0 | 2 | 6 |
| $c$ = 3 | 0 | 0 | 0 | 2 | 10 |
| $c$ = 4 | 7 | 5 | 0 | 2 | 0 |
| $c$ = 5 | 0 | 0 | 0 | 2 | 2 |
| $c$ = 6 | 1 | 1 | 0 | 2 | 5 |
| $c$ = 7 | 2 | 2 | 1 | 2 | 0 |
| $c$ = 8 | 3 | 3 | 1 | 2 | 0 |
| $c$ = 9 | 0 | 0 | 1 | 2 | 1 |
| $c$ = 10 | 2 | 3 | 5 | 2 | 0 |
| $c$ = 11 | 1 | 1 | 9 | 2 | 0 |
| $c$ = 12 | 0 | 0 | 0 | 2 | 1 |
| $c$ = 13 | 5 | 7 | 7 | 2 | 0 |
| $c$ = 14 | 6 | 5 | 5 | 2 | 0 |
| $c$ = 15 | 0 | 1 | 1 | 2 | 5 |

Table 1 shows results obtained with 3 different metrics defined in this section, as well as the values of $a_c$ for proportional and uniform placements. In each of the metrics we use $z_0$ = 20*min* as the value for age.

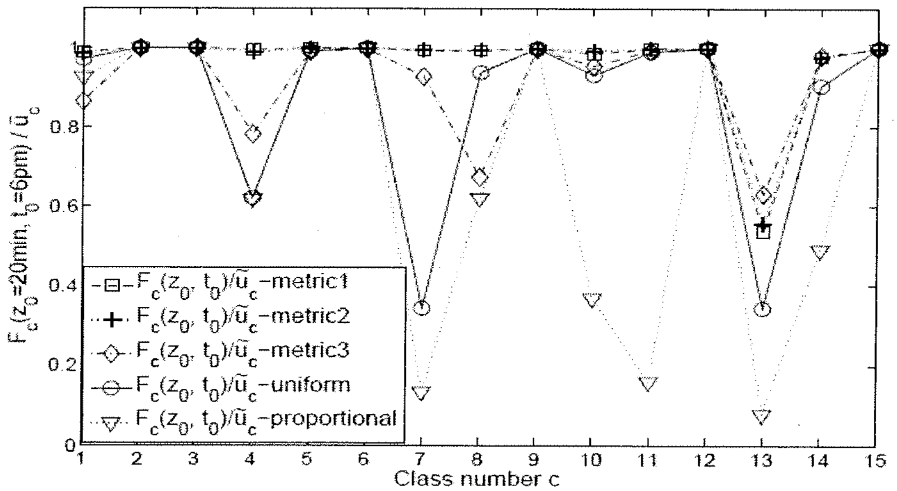


**Figure 7: QoS achieved in classes $1 - 15$ using *greedy method* for placement of base stations, based on MF approximation. The curves show proportions of mobile nodes in each class with age $z < 20$ minutes, at time $t_0 = 6p.m.$, for 3 metrics, defined earlier in this section, as well as for proportional and uniform placements of base stations.**

Figure 7 shows the effect these placements have on quality of service. It displays the fraction of mobile nodes in each class that have age lower then 20mn; we see that *metric*1 and *metric*2 provide similar results, even though the placements of base stations for these two metrics are different. *Metri*3 sacrifices efficiency for fairness, and degrade performance of most classes, to reach a marginal improvement in the worst case class. Finally we see that proportional placement of base stations, based on the density of mobile node, results in worse performance, than the less sophisticated uniform placement with 2 base stations in each class.

### 7.2 Classification of Classes

While the tail of our trace is insufficient for an evaluation of high age asymptotic, (Section 5.2.2), low age asymptotic analysis proves to be an efficient tool for classification of classes proposed in Section 5.2.1. For different placements of base stations, evaluated in the previous example, the sign of the first derivative (Eq.(12)) always correctly classifies the classes into those with "dominant opportunistic contacts" and those with "dominant infrastructure", i.e. it always matches the characteristic shapes of the age histograms, for these two types of classes (Figure 8). Due to the lack of space, the complete set of results will be provided in the associated tech-report.

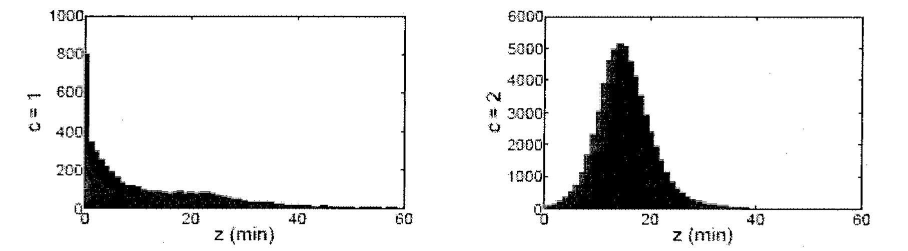


(a) dominant infrastructure (b) dominant opp. contacts

**Figure 8: Typical shapes of age histograms for class with "dominant infrastructure" (c=1) and class with "dominant opportunistic contacts" (c=2). base station placement corresponds to *metric*1 (Table 1).**

For the case of a base station put in class 3, which corresponds to the scenario with base stations placed in a subset of non-neighboring classes (Section 5.2.1), we conclude that class 3 is also dominated by opportunistic contacts.

The described method enables to determine the quality of service. An operator of a mobile telephone network intends to maintain a dynamic content in a set of mobile subscribers by means of an opportunistic peer-to-peer update with a guarantee of the type that 99% of the users are provided with a version of a specific content can now analytically dimension the required resources for the network. The inventive method provides information about how many base stations are required and where they should be located to cover a certain area within the opportunistic network 100. This kind of information is very helpful to reduce installation costs for delay tolerant opportunistic networks in general.

The present invention allows that the network operator provides different levels of quality of service to different data flows. Specifically, that means e.g. that the web site of a newspaper is assigned with a lower level of quality of service than the web site of a TV broadcaster since the latter changes more dynamically than the further.

In a practical application the present invention enables a network provider to adapt the time of active operation of a base station to emit a specific content such that the desired age of the content in the network is maintained without going beyond this limit. The desired quality of service does not necessarily require that the base stations are operated continuously for this purpose and are consequently available for other tasks as well. This can be used to reduce the operation costs of a network.

These and other features and advantages of the present disclosure may be readily ascertained by one of ordinary skill in the pertinent art based on the teachings herein. It is to be understood that the teachings of the present disclosure may be implemented in various forms of hardware, software, firmware, special purpose processors, or combinations thereof.

The teachings of the present disclosure may be implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more Central Processing Units ("CPUs"), a Random Access Memory ("RAM"), and Input/Output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and an output unit.

It is to be further understood that, because some of the constituent system components and steps depicted in the accompanying drawings may be implemented in software, the actual connections between the system components or the process function blocks may differ depending upon the manner in which the present disclosure is programmed. Given the teachings herein, one of ordinary skill in the pertinent art will be able to contemplate these and similar implementations or configurations of the present disclosure.

As will be recognized by those of ordinary skill in the pertinent art based on the teachings herein, alternate embodiments are possible. Given the teachings of the disclosure provided herein, those of ordinary skill in the pertinent art will contemplate various alternate configurations and implementations of the system while practicing within the scope and spirit of the present disclosure.

List of reference numbers

**[0118]**

| | |
|---|---|
| 100 | MANET |
| 101 | base station |
| 102-107 | mobile nodes |
| 108 | communication connection base station to mobile node |
| 109 | communication connection mobile node to mobile node |
| 200 | mobile node |
| 201 | CPU |
| 202 | system bus |
| 203 | ROM |
| 204 | RAM |
| 205 | display adapter |
| 206 | input/output adapter |
| 207 | user interface adapter |
| 208 | display unit |
| 209 | key pad |
| 210 | wireless communication device |
| 301 | time line |

## Claims

**1.** Method for measuring the age of content in a mobile opportunistic network comprising at least one fixed base station and a plurality of mobile nodes, wherein the method comprises the following steps;

- emitting a content by the base station (101);
- receiving the content by one or several mobile nodes (102 to 107);
- measuring the time elapsed since the content has been emitted by the base station (101);
- establishing a contact between a first and second mobile node;
- comparing the measured time of the content on the first and second mobile node;
- transferring the more recent content between the first and second mobile node;
- replacing older content by the more recent content on the first and second mobile nodes;
- calculating the number of nodes (Uc) that are present at a specific location in the network (100), and
- calculating the number of nodes (Fc) that are present in the specific location and having a content that is younger than a predetermined age.

**2.** Method according to claim 1, wherein the method further comprises the step of calculating the rate of contacts between a node in one location with a node in the same location.

**3.** Method according to claim 1, wherein the method further comprises the step of calculating the rate of contacts between a node in one location with a node in another location.

**4.** Method according to claim 1, wherein the method further comprises the step of defining the elapsed time since the content has being emitted by the base station as the age of the content.

**5.** Method according to claim 1, wherein the method further comprises the step of storing several content items in the mobile node having received the content items.

**6.** Method according to claim 5, wherein the method further comprises the step of defining the elapsed time since a content item has been emitted by the base station as the age of the content item.

**7.** Method according to claim 1, wherein the number of nodes (Uc) that are present at a specific location represents a fraction of the total number of nodes present in the network.

**8.** Method for controlling the operation of one or several base stations in a mobile opportunistic network comprising

also a plurality of mobile nodes, wherein the method comprises the step of executing the method according to claim 1 and
adapting the operation of the one or several base stations to achieve a predetermined age of the content in the mobile nodes.

**9.** Method according to claim 8 wherein the method further comprises the step of
limiting the duration of the operation of the base station to the necessary duration.

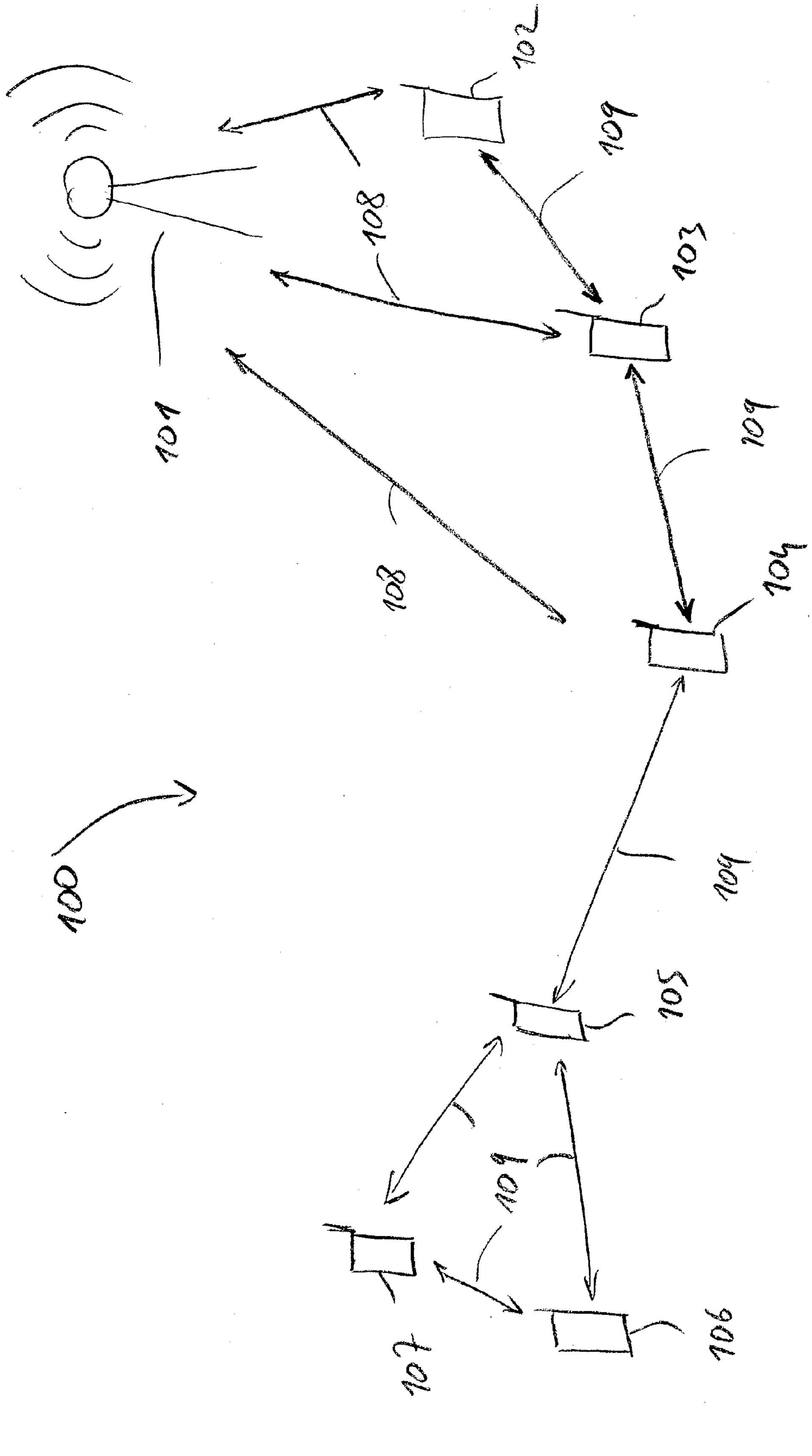


Fig. 1

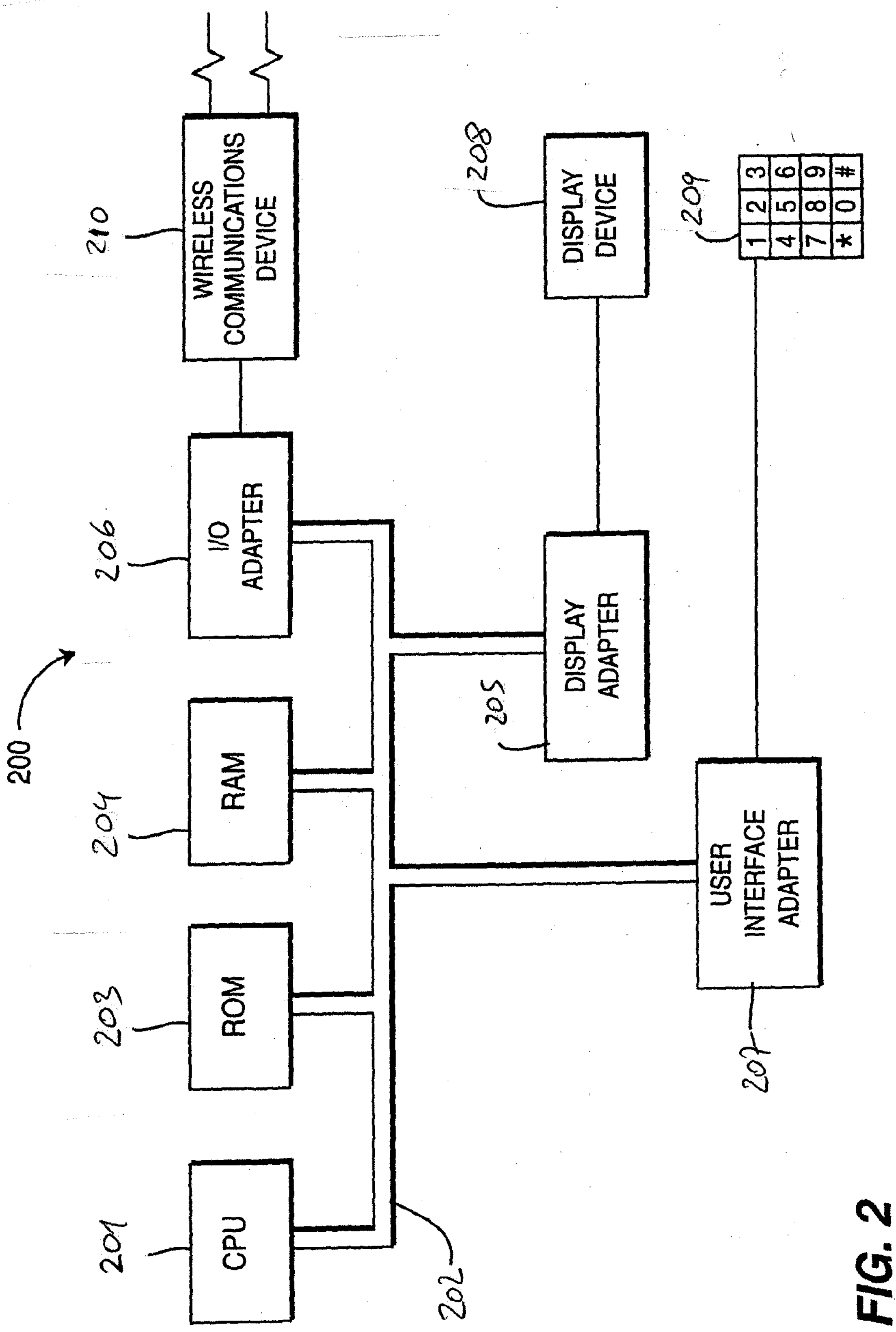
200
201
CPU
202
203
ROM
204
RAM
205
DISPLAY ADAPTER
206
I/O ADAPTER
207
USER INTERFACE ADAPTER
208
DISPLAY DEVICE
209
210
WIRELESS COMMUNICATIONS DEVICE

FIG. 2

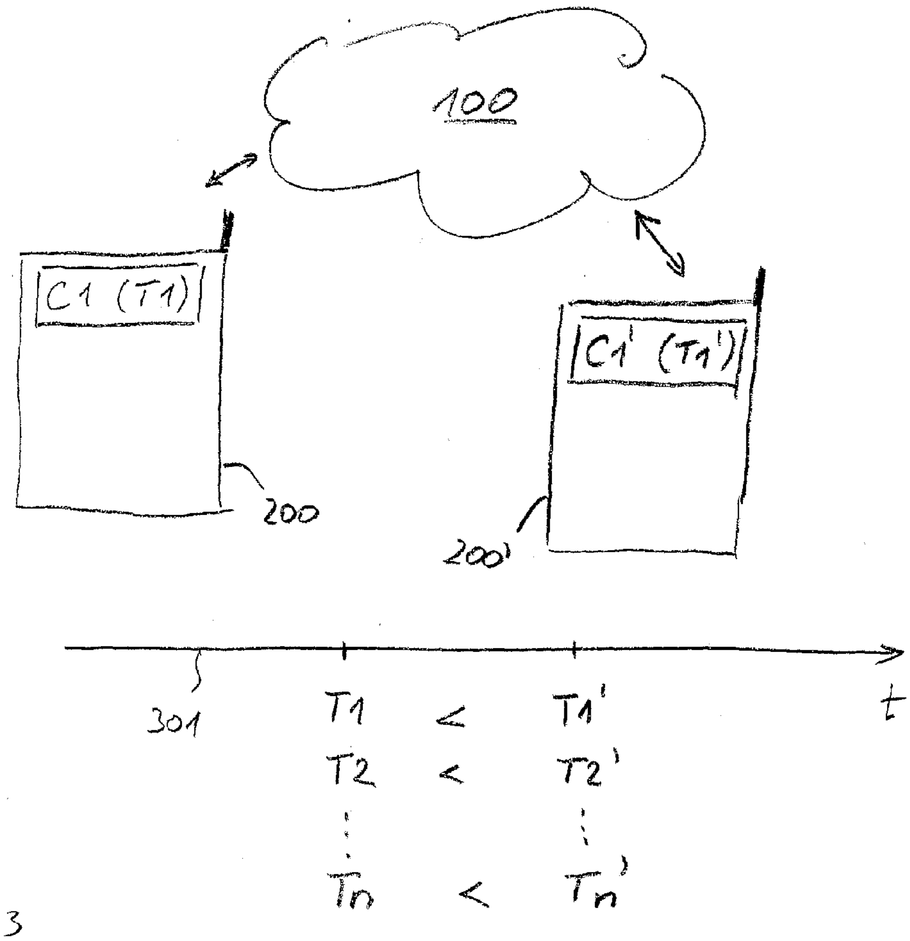
100
C1 (T1)
200
C1' (T1')
200'
301
T1 < T1'
T2 < T2'
Tn < Tn'
t

Fig. 3

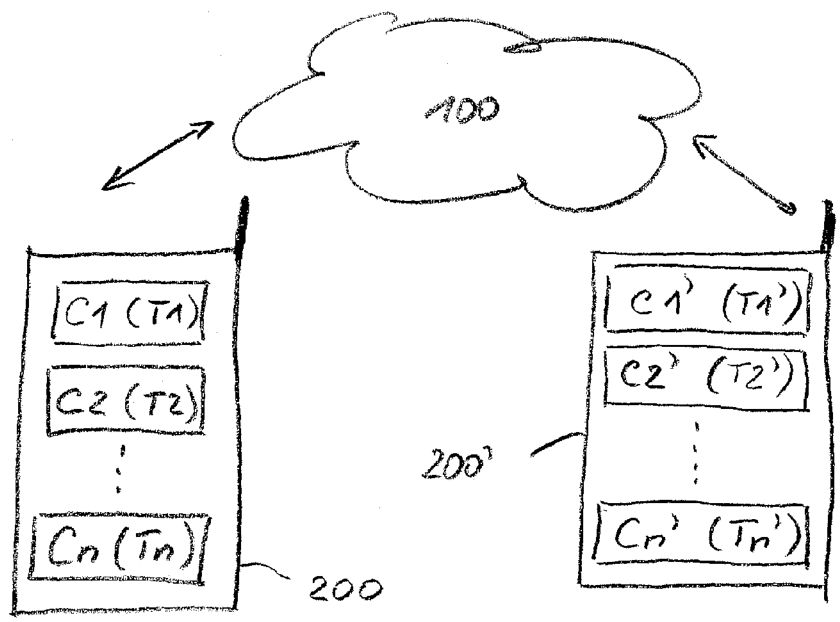
100
C1 (T1)
C2 (T2)
Cn (Tn)
200
C1' (T1')
C2' (T2')
Cn' (Tn')
200'

Fig. 4

Europäisches Patentamt
European Patent Office
Office européen des brevets

# EUROPEAN SEARCH REPORT

Application Number
EP 09 30 5441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IOANNIDIS S ET AL: "Optimal and Scalable Distribution of Content Updates over a Mobile Social Network" INFOCOM 2009. THE 28TH CONFERENCE ON COMPUTER COMMUNICATIONS. IEEE, IEEE, PISCATAWAY, NJ, USA, 19 April 2009 (2009-04-19), pages 1422-1430, XP031468897 ISBN: 978-1-4244-3512-8 * sections I., III., VII. * * abstract; figure 3; table I * ----- | 1-9 | INV. H04L29/08 H04L12/26 |
| A | MUHAMMAD HASSAN RAZA ET AL: "Determining Density in Ad hoc Networks" ELECTRICAL AND COMPUTER ENGINEERING, CANADIAN CONFERENCE ON, IEEE, PI, 1 May 2006 (2006-05-01), pages 2160-2163, XP031004633 ISBN: 978-1-4244-0038-6 * section 1 * * abstract * ----- | 1-9 | |
| | | | TECHNICAL FIELDS SEARCHED (IPC) |
| A | WISCHHOF L ET AL: "Congestion control in vehicular ad hoc networks" VEHICULAR ELECTRONICS AND SAFETY, 2005. IEEE INTERNATIONAL CONFERENCE ON XI'AN, CHINA OCT. 14-16, 2005, PISCATAWAY, NJ, USA,IEEE, 14 October 2005 (2005-10-14), pages 58-63, XP010867244 ISBN: 978-0-7803-9435-3 * the whole document * ----- -/-- | 1-9 | H04L |

The present search report has been drawn up for all claims

| Place of search | Date of completion of the search | Examiner |
|---|---|---|
| Munich | 20 November 2009 | Biro, Udo Bela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 09 30 5441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALTAIAN E ET AL: "Distributed Storage Management of Evolving Files in Delay Tolerant Ad Hoc Networks" INFOCOM 2009. THE 28TH CONFERENCE ON COMPUTER COMMUNICATIONS. IEEE, IEEE, PISCATAWAY, NJ, USA, 19 April 2009 (2009-04-19), pages 1431-1439, XP031468898 ISBN: 978-1-4244-3512-8 * the whole document * ----- | 1-9 | |
| | | | TECHNICAL FIELDS SEARCHED (IPC) |

The present search report has been drawn up for all claims

2

| Place of search | Date of completion of the search | Examiner |
|---|---|---|
| Munich | 20 November 2009 | Biro, Udo Bela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **Valentin Dumitrescu ; Jinhua Guo.** Context assisted routing protocols for inter-vehicle wireless communication. *2005 IEEE Intelligent Vehicles Symposium Proceedings (IEEE Cat. No. 05TH8792), 594-600. IEEE,* 2005, vol. 905, 10